# EUROPÄISCHE PATENTSCHRIFT

(11) **EP 3 112 717 B1**
(45) Veröffentlichungstag und Bekanntmachung des Hinweises auf die Patenterteilung: **12.08.2020**
(21) Anmeldenummer: 16171871.3
(22) Anmeldetag: 30.05.2016
(51) Int. Cl.: F16D 23/12, F16D 13/75, F16H 21/16

(54) **BETÄTIGUNGSEINHEIT, KRAFTFAHRZEUG SOWIE VERFAHREN ZUM BETRIEB EINER BETÄTIGUNGSEINHEIT**
ACTUATION UNIT, MOTOR VEHICLE AND METHOD FOR OPERATING AN ACTUATION UNIT
UNITÉ D'ACTIONNEMENT, VÉHICULE AUTOMOBILE ET PROCÉDÉ D'EXPLOITATION D'UNE UNITÉ D'ACTIONNEMENT

(30) Priorität: 03.07.2015 DE 102015212531
(43) Veröffentlichungstag der Anmeldung: 04.01.2017
(73) Patentinhaber: ZF Friedrichshafen AG, 88046 Friedrichshafen (DE)
(72) Erfinder: Mäder, Fred, 97532 Üchtelhausen (DE); Baumgart, Sebastian, 97705 Burkardroth (DE)
(74) Vertreter: ZF Friedrichshafen AG

(56) Entgegenhaltungen:
- EP-A2- 2 916 025
- EP-A2- 2 990 681
- WO-A1-2013/162160
- DE-A1-102011 102 103
- DE-B1- 1 505 429
- FR-A1- 2 942 012

## Beschreibung

Die Erfindung betrifft eine Betätigungseinheit für eine Kupplung umfassend eine Antriebseinheit, ein Betätigungselement zum Betätigen der Kupplung und ein Getriebe zum Übertragen eines durch die Antriebseinheit erzeugten Drehmomentes auf das Betätigungselement, wobei die Bewegung des Getriebes durch wenigstens einen Anschlag in wenigstens einer Richtung begrenzt ist. Siehe EP2916025 A2 als Stand der Technik.

Aus der nachveröffentlichten DE 10 2014 215 324 A1 geht ein Kupplungsaktuator der eingangs genannten Art hervor. Das Getriebe des dort beschriebenen Aktuators weist mehrere Teilgetriebe auf, beispielsweise ein Stirnradgetriebe zwischen Antriebseinheit und einem Zahnradsegment. Das Betätigungselement wird dagegen mit einem Kurvengetriebe angetrieben.

Weiterhin weist das Getriebe einen Verschließausgleichmechanismus auf, durch den in Abhängigkeit des Verschließzustands der Kupplung die Relativposition zwischen Kurvengetriebe und Zahnradsegment verändert wird. Auf diese Art und Weise wird eine Anpassung der zum Auskuppeln aufgewendeten Kraft wie auch der Startposition, auch Einkuppelposition genannt, erreicht.

Allerdings wird bei diesem Aufbau der Ausrückweg mit zunehmendem Verschleiß verringert.

Weiterhin sind auch andere Situationen möglich, in denen der Ausrückweg sich verringern kann, unabhängig davon, ob ein Verschließausgleichmechanismus vorhanden ist oder nicht.

Ausgehend hiervon ist es Aufgabe der vorliegenden Anmeldung, eine Betätigungseinheit für eine Kupplung anzugeben, bei der eine Führungsgröße, insbesondere der Ausrückweg, auf einem vorgegebenen Wert gehalten werden kann.

Zur Lösung dieser Aufgabe ist einer Betätigungseinheit mit den Merkmalen von Anspruch 1 vorgesehen. Ausgestaltungen der Erfindung ergeben sich aus den Unteransprüchen.

Als Kern der Erfindung wird angesehen, dass wenigstens einer der Anschläge veränderbar ist. Bei bekannten Betätigungseinheiten bzw. Kupplungsaktuatoren weist das Getriebe üblicherweise zwei Anschläge auf, nämlich einen für die Einkuppelposition und einen für die Auskuppelposition, bzw. für die Startposition und die Endposition bezogen auf den Auskuppelweg. Dabei handelt es sich um die Maximalpositionen sowohl des Getriebes wie auch dementsprechend des Betätigungselements beim Ausrücken. Beim Einrücken sind die Start- und Endposition vertauscht. Die Einkuppelposition bezeichnet dabei diejenige Position, bei der das Betätigungselement eine Position einnimmt, in der die Kupplung eingekuppelt ist. Entsprechend bezeichnet die Auskuppelposition eine Position, in der die Kupplung ausgekuppelt ist. Einrücken und Einkuppeln werden hierbei synonym verwendet, gleiches gilt für das Ausrücken.

Für beide Positionen existieren Anschläge, wobei sich ein bewegliches Anschlagsteil auf ein ortsfestes Anschlagsteil zubewegt. Der Anschlag ist üblicherweise gedämpft, indem ein elastisches Element wie eine Feder entweder zwischen den Anschlagsteilen oder zwischen einem der Anschlagsteile und dem Gehäuse vorgesehen ist. Der ortsfeste Anschlagsteil kann beispielsweise durch das Gehäuse der Betätigungseinheit realisiert sein. Zur Lösung der eingangs genannten Probleme ist der Anschlag nunmehr veränderbar. Das heißt, dass zumindest eines der beiden Anschlagsteile in seiner Position so veränderbar, dass sich die Anschlagswirkung ändert. Die Anschlagwirkung ändert sich z.B. wenn sich die Anschlagposition verändert oder die Relativstellung zweier Anschlagsteile zueinander. Da der Anschlag die Bewegung des Getriebes begrenzt bewirkt eine Veränderung des Anschlags dementsprechend eine Veränderung der Bewegbarkeit des Getriebes. Das heißt, dass der Anschlag in Abhängigkeit wenigstens einer Führungsgröße veränderbar ist, so dass die Begrenzung der Bewegung des Getriebes veränderbar ist.

Vorteilhafterweise kann als Führungsgröße eine vorgebbare Betriebsgröße oder eine von einer vorgebbaren Betriebsgröße des Betätigungselementes abhängige oder ableitbare Größe verwendbar sein. Insbesondere kann die vorgebbare Betriebsgröße der Ausrückweg des Betätigungselementes sein.

Wie bereits eingangs ausgeführt kann unter anderem bei bestimmten Realisierungen eines Verschleißausgleichmechanismus der Ausrückweg des Betätigungselementes über die Lebensdauer des Kupplungsaktuators veränderlich sein. Die Führungsgröße ist damit ein vorgegebener Ausrückweg, der von der Position des Anschlags bzw. des beweglichen Anschlagsteils abhängt. Durch die Veränderung des Anschlags ist damit auch der Ausrückweg veränderbar.

Dabei muss die Führungsgröße kein starrer Wert sein, d.h. dass bspw. der Ausrückweg nicht konstant gehalten werden muss. Es kann auch vorgesehen sein dass die Führungsgröße einer Veränderung unterliegt.

Bevorzugt umfasst der Anschlag als bewegliches Anschlagsteil einen exzentrisch gelagerten Bolzen. Eine Drehung des den Bolzen lagernden Elementes bewirkt damit eine exzentrische Rotation des Bolzens. Dies kann beispielsweise durch eine Befestigung des Bolzens abseits der Rotationsachse des den Bolzen lagernden Elementes bewirkt werden. Die Veränderung des Anschlags erfolgt dementsprechend gemäß einer halben Sinuskurve, das heißt, dass zu Beginn der Veränderung des Anschlags nur geringe Veränderungen des Ausrückweges bewirkt werden, im mittleren Teil der Drehbewegung des dem Bolzen lagernden Elementes dagegen große Änderungen des Ausrückweges und gegen Ende der Drehung hin wieder nur kleine Änderungen.

Vorteilhafterweise kann das Getriebe einen Sensor zur Erfassung der Führungsgröße aufweisen. Der Sensor ist bevorzugt mechanisch ausgebildet. Als Sensor wird dabei bereits jedes Element verstanden, das eine Position oder Lage an ein anderes Element weiterkommunizieren kann. Ein Wegsensor kann beispielsweise als ein Stift ausgestaltet sein.

Der Sensor zur Erfassung der Führungsgröße ist bevorzugt als Drehsensor ausgestaltet. Damit kann er eine Relativstellung, insbesondere einen Drehwinkel, von zwei Getriebeelementen feststellen. Vorteilhafterweise kann der Drehsensor eine Relativstellung zwischen der Getriebeeingangsseite und der Getriebeausgangsseite sensieren. Bspw. kann die Relativstellung zwischen ein Zahnradsegment und einem Kurvengetriebe sensiert werden.

Mit besonderem Vorteil kann der Sensor mit den beweglichen Anschlagsteil des Anschlags drehfest verbunden sein. Beispielsweise kann der Sensor mit dem beweglichen Anschlagsteil mittels einer Verzahnung verbunden sein. Dadurch kann mittels des Sensors eine Relativverdrehung zwischen Getriebeeingang und Getriebeausgang auf das bewegliche Anschlagsteil des Anschlags übertragen werden. Ist das bewegliche Anschlagsteil wie oben beschrieben als exzentrisch rotierender Bolzen ausgestaltet, so kann mittels des Sensors eine Relativverdrehung des Bolzens erreicht werden. Dabei ist der Bezug zur Relativverdrehung wichtig, da das Getriebe bzw. seine Teile bei einem Betätigungsvorgang, sei es ein Einkuppel- oder ein Auskuppelvorgang, in einer vorgegebenen Art und Weise bewegt werden. Dabei werden Teile des Kurvengetriebes, das einen Teil des Getriebes bilden kann, während eines Betätigungsvorganges drehend bewegt. Bei einer bestimmten Stellung der Antriebseinheit nehmen aber die einzelnen Teile der Betätigungseinheit eine vorher festlegbare Position ein. Mittels des Sensors und des veränderbaren Anschlags kann nun erreicht werden, dass sich deren Position oder Ausrichtung bei einer vorgegebenen Stellung der Antriebseinheit ändert oder, dass die Stellung trotz einer Änderung einer Stellung eines anderen Getriebeelements, gleichbleibt. Beispielsweise kann, wie bereits beschrieben, die Wirkung eines Verschleißausgleichmechanismus auf den Ausrückweg kompensiert werden. Dabei wird die Wirkung der Änderung einer ersten Position, nämlich des Verschließausgleichmechanismus auf das Betätigungselement, durch eine zweite Änderung, nämlich die Veränderung des Anschlags, ausgeglichen.

Vorzugsweise kann der Sensor als Sensierungshülse ausgebildet sein. Dabei kann sich der Sensor um die gleiche Rotationsachse drehen wie ein anderes Getriebeteil, beispielsweise das Zahnradsegment oder auch das Kurvengetriebe.

Mit besonderem Vorteil kann der Sensor mit demjenigen Getriebeteil, das das Betätigungselement antreibt, drehfest verbunden sein. Ist der Sensor weiterhin mit dem beweglichen Anschlagsteil drehfest verbunden, so überbrückt der Sensor letzten Endes den Verschließausgleichmechanismus. In diesem Fall ist der Sensor eine drehfeste Verbindung zwischen dem beweglichen Anschlagsteil und dem Getriebeteil, das das Betätigungselement antreibt. Bei dem Getriebeteil, das das Betätigungselement antreibt, kann es sich insbesondere um ein Teil eines Kurvengetriebes handeln. Mit anderen Worten ist der Sensor eine drehfeste Verbindung zwischen dem beweglichen Anschlagsteil und dem Getriebeausgang oder der Getriebeausgangsseite.

Allgemeiner ausgedrückt kann der Sensor zwischen der Antriebsseite und der Abtriebseite des Getriebes angeordnet sein. Insbesondere dient der Sensor zur Überbrückung bzw. Kompensation der Wirkung eines Verschleißausgleichmechanismus.

Vorteilhafterweise kann der Sensor dazu ausgebildet sein, eine durch eine in der Betätigungseinheit angeordnete Verschleißausgleichseinrichtung verursachte Relativbewegung, insbesondere Relativdrehung, zwischen zwei Getriebeelementen zu erfassen. Insbesondere kann der Sensor die Abtriebsseite des Getriebes drehfest mit dem bewegbaren Anschlagsteil des Anschlags verbinden. Dies ist wiederum eine andere Bezeichnung für die Verbindung zwischen Anschlag und Getriebeausgang.

Vorzugsweise kann die Abtriebseite des Getriebes wie beschrieben als Kurvengetriebe ausgebildet sein. Mittels des Kurvengetriebes kann über den Ausrückweg hin gesehen eine veränderbare Kraft ausgegeben werden. Insbesondere kann dabei durch eine Veränderung der Startposition des Kurvengetriebes die Kraftwirkung der Betätigungseinheit zu Beginn des Ausrückens oder Einrückens variiert werden. Vorteilhafterweise kann das Getriebe ein Zahnradsegment aufweisen und der bewegliche Anschlagsteil des Anschlags im oder am Zahnradsegment drehbar gelagert sein. Dies erlaubt eine besonders kompakte Bauweise des Getriebes. Weiterhin kann auf dieser Art und Weise auch Bauraum optimiert eine Verbindung zwischen der Abtriebseite und dem bewegbaren Anschlagsteil des Anschlags hergestellt werden.

Wie beschrieben gleicht der veränderbare Anschlag bevorzugt die Wirkung eines Verschleißausgleichsmechanismus auf den Ausrückweg eines Betätigungselementes zumindest teilweise aus. Ein bevorzugtes Getriebe mit Verschleißausgleichsmechanismus stellt sich dabei wie folgt dar:
Bevorzugt kann durch den Verschleißausgleichsmechanismus die Einrückposition des Betätigungselementes an den Verschleißzustand der Kupplung anpassbar sein, indem sich der Hebelarm zwischen Getriebe und Betätigungselement mit Wechsel der Einrückposition aufgrund einer Verschleißausgleichsanpassung vergrößert. Dies kann dadurch vollzogen werden, dass sich auf der Abtriebsseite des Getriebes ein Kurvengetriebe befindet.

Vorteilhafterweise kann der Abstand zwischen der Drehachse des Getriebes oder eines Verbindungselementes des Getriebes und der Längsachse des Betätigungselementes während der Drehbewegung des Getriebes im Wesentlichen konstant gehalten werden. Dadurch wird das Betätigungselement vollkommen linear bewegt, wodurch das Gehäuse im der Kupplung zugwandten Abschnitt kompakter gebaut werden kann, da der Stößel bzw. das Betätigungselement keine Auf- und Abbewegung mehr durchführt. Dadurch, dass das Betätigungselement eine Linearbewegung durchführt, ist weiterhin die Reibung zwischen dem Betätigungselement und der Kupplung bzw. dem Ausrücklager, an dem das Betätigungselement angreift, verringert. Das Verbindungselement ist ein Teil des Getriebes und zwar derjenige, der mit dem Betätigungselement in Eingriff steht.

Vorzugsweise das Getriebe das Betätigungselement an einer Angriffsposition angreifen, wobei die Angriffsposition während der Drehbewegung des Getriebes veränderbar ist. Bei bekannten Betätigungseinheiten nimmt eine am als Verbindungselement verwendeten Schneckenrad befestigte Gelenkpfanne den Stößel auf. Die Angriffsposition des Verbindungselementes ist damit der Gelenkkopf des Stößels, der sich zwar in der Gelenkpfanne während der Drehbewegung des Schneckenrades dreht, die Gelenkpfanne aber nicht verlässt. Im Gegensatz dazu ist in Weiterbildung der Erfindung vorgesehen, dass die Angriffsposition des Verbindungselementes am Betätigungselement während der Drehbewegung des Verbindungselementes verändert wird. Dies bedeutet, dass das am Betätigungselement angreifende Teil des Verbindungselementes seine Relativposition zum Betätigungselement verändert.

Das Getriebe weist wie beschrieben einen Verschleißausgleichmechanismus auf, durch den die Grundposition des Betätigungselementes an den Verschleißzustand der Kupplung anpassbar ist. Die beschriebenen Vorteile betreffend die Linearbewegung des Betätigungselementes sind unabhängig vom Vorhandensein eines Verschleißausgleichmechanismus. Dieser sorgt jedoch dafür, dass die Grund- bzw. Ausgangsposition des Betätigungselementes an den Verschleißzustand der Kupplung angepasst wird. Bei Verschleiß der Kupplungsscheibe verlagern sich die Membranfederzungen der Kupplung im eingerückten Zustand nach außen, das heißt von der Kupplungsscheibe weg. Die Grundposition des Betätigungselementes, das ist dementsprechend die Position, in der das Betätigungselement im eingerückten Zustand über einen Ausrückhebel oder eine Ausrückgabel am Ausrücklager der Kupplung angreift, muss also derart angepasst werden, dass sich die Grundposition oder Einrückposition des Betätigungselementes mit zunehmendem Verschleiß von der Kupplungsscheibe entfernt. Hierzu dient ein Verschleißausgleichmechanismus.

Vorteilhafterweise kann das Verbindungselement scheibenförmig ausgebildet sein und auf der Seite des Bedienungselementes wenigstens einen Vorsprung aufweisen. Dadurch wird die Aufgabenverteilung in Bezug auf die wechselseitige Aufnahme vertauscht. Dabei kann der Vorsprung grundsätzlich beliebige Formen annehmen. Beispielsweise kann er quaderförmig ausgebildet sein. Bevorzugt ist jedoch vorgesehen, dass der Vorsprung bolzenförmig ist. Aufgrund der zylindrischen Ausgestaltung weist die Mantelfläche des Vorsprungs keinerlei Kanten oder Ecken auf. Da der Vorsprung im Vergleich zum Betätigungselement auch eine Rotationsbewegung ausführt, kann dadurch der Verschleiß vermindert werden.

Mit Vorteil können zwei Vorsprünge vorgesehen sein, die von der Drehachse des Verbindungselementes gleich beabstandet sind. Die Vorsprünge übertragen dementsprechend das gleiche Drehmoment. Durch die Verwendung zweier Vorsprünge kann der Winkel der Drehbewegung, bei dem das Verbindungselement das Betätigungselement antreibt, vergrößert werden. Insbesondere wird es dadurch möglich, dass das Verbindungselement auch Rotationsbewegungen um mehr als 180° durchführt, was mit einer Gelenkpfanne nicht möglich ist. Deren Bewegung ist per se auf 180° beschränkt, aufgrund praktischer Limitationen sinkt der verwendbare Winkelbereich der Drehbewegung auf deutlich unter 180°. Durch die Verwendung von Vorsprüngen lässt sich dagegen ein beliebiger Drehwinkel realisieren, es sind lediglich genügend Vorsprünge in Umfangsrichtung vorzusehen.

Mit besonderem Vorteil können zwei Vorsprünge vorgesehen sein, die von der Drehachse des Verbindungselementes bzw. des Getriebes unterschiedlich beabstandet sind. Das Verbindungselement als Teil des Getriebes hat zumeist dieselbe Drehachse. Daher kann man sich sowohl auf die Drehachse des Verbindungselementes wie auch die des Getriebes beziehen, ohne dass technisch ein Unterschied entsteht. Bevorzugt ist der beim Ausrücken zuerst angreifende Vorsprung näher an der Drehachse gelagert als der zweite Vorsprung. Bezogen auf die Einrückposition im Neuzustand der Kupplung ist der zuerst angreifende Vorsprung normalerweise der in Drehrichtung kupplungsseitige Vorsprung. Beim Wechsel zum zweiten Vorsprung steigt dabei automatisch der Hebelarm.

Vorteilhafterweise kann das Betätigungselement wenigstens eine Ausnehmung zur zumindest zeitweisen Aufnahme eines Vorsprungs des Verbindungselementes des Getriebes aufweisen. Die Ausnehmung kann das Betätigungselement auf gesamter Breite beaufschlagen, die Ausnehmung kann aber auch wie ein Sackloch ausgebildet sein, das heißt nur in einer Tiefe in das Betätigungselement eindringen, die geringer ist, als die Breite des Betätigungselementes. Dies bedeutet aber nicht, dass die Grundfläche der Ausnehmung kreisförmig sein soll oder sein muss.

Vielmehr ist vorzugsweise vorgesehen, dass die Ausnehmung in Form eines Langlochs ausgebildet ist. Alternativ kann die Ausnehmung in Form eines zu einer Seite offenen Langlochs ausgebildet sein. Diese Ausgestaltung ermöglicht, dass der Vorsprung des Verbindungselementes in der Ausnehmung verschiebbar ist, wodurch eine Relativbewegung des Vorsprungs im Vergleich zum Betätigungselement ermöglicht ist. Diese Ausgestaltung der Verbindung des Verbindungselementes mit dem Betätigungselement ermöglicht auf einfache Art und Weise, dass das Betätigungselement linear bewegt wird. Die Bewegungsanteile senkrecht zur Richtung der Linearbewegung werden dann durch die Verschiebung des Vorsprungs in der Ausnehmung abgefangen.

Alternativ ist es auch möglich, dass die Ausnehmung einen kreisförmigen Querschnitt aufweist und der Vorsprung am Verbindungselement verschiebbar befestigt ist. Dabei ist denkbar, dass der Vorsprung einen Hinterschnitt aufweist, der in einer am Verbindungselement vorhandenen Schiene verschiebbar fixiert ist. Mit der Ausgestaltung der Ausnehmung als Langloch und der dementsprechenden Möglichkeit, den Vorsprung starr am Verbindungselement zu fixieren oder diese auch einstückig auszubilden ist aber aufgrund der Einfachheit in der Herstellung bevorzugt.

Vorteilhafterweise kann die Längsrichtung der Ausnehmung senkrecht zur Längsrichtung des Betätigungselementes angeordnet sein. Aufgrund dieser Ausgestaltung können, wie bereits beschrieben, alle Bewegungen des Vorsprungs senkrecht zur Richtung der Linearbewegung des Betätigungselementes aufgefangen werden, so dass eine Bewegbarkeit des Betätigungselementes, die nicht in der Richtung der Linearbewegung liegt, nicht mehr nötig ist. Dadurch kann wie beschrieben, der Bauraum der Betätigungseinheit dahin gehend verringert werden, dass das Gehäuse im Bereich des Betätigungselementes einen geringeren Durchmesser aufweisen kann. Vorteilhafterweise kann das Betätigungselement eine ringförmige Versteifung aufweisen, die senkrecht zur Drehachse des Verbindungselementes des Getriebes angeordnet ist. Da die Betätigungseinheit eine oder mehr Ausnehmungen aufweist, die insbesondere auch noch länglich ausgebildet sind, kann die Steifigkeit des Betätigungselementes insbesondere bei Druckbeaufschlagung in Mitleidenschaft gezogen werden. Diese Steifigkeit kann durch das Vorsehen der Versteifung wieder erhöht werden. Die Versteifung ist ringförmig, damit die Vorsprünge des Verbindungselementes auch nach Austritt der Vorsprünge aus den Langlöchern bzw. Ausnehmungen frei bewegt werden können.

Vorteilhafterweise ist bei Vorhandensein wenigstens zweier Ausnehmungen die Länge der Ausnehmungen in Abhängigkeit des Winkelabstandes der Vorsprünge des Verbindungselementes festgelegt. Die Festlegung kann derart erfolgen, dass zu jedem Punkt der Drehbewegung des Verbindungselementes immer ein Vorsprung am Betätigungselement angreift. Ansonsten kann es vorkommen, dass die Vorsprünge mit den Ausnehmungen verklemmen.

Vorteilhafterweise kann das Verbindungselement eine zylindrische Form besitzen und eine Schlingfeder mit mehreren Wicklungen um die Außenseite gebunden sein. Die Schlingfeder kann durch einen Anschlag derart festgezogen werden, dass sie das Verbindungselement in Ausrückrichtung beaufschlagt, beim Einrücken am Ende der Drehbewegung aber Spiel lässt, so dass das Verbindungselement im Vergleich zur Antriebseinheit verdreht werden kann, wodurch die Grundposition des Verbindungselementes an einen Verschleiß der Kupplung angepasst wird.

Diesbezüglich ist weiterhin vorteilhaft vorgesehen, dass das Verbindungselement in einem Zahnradsegment gelagert ist, wobei das Zahnradsegment die gleiche Drehachse aufweist, wie das Verbindungselement. Mit der Schlingfeder ist es dabei möglich, die Relativposition des Verbindungselementes zum Zahnradsegment zu verändern, so dass sich das Zahnradsegment und das Verbindungselement nicht fest miteinander drehen müssen bzw. das Zahnradsegment und das Verbindungselement nicht miteinander fixiert sein müssen.

In einer alternativen Ausgestaltung ist es möglich, dass das Verbindungselement selbst als Zahnradsegment ausgestaltet ist. Das heißt, dass sich auf der Außenseite des Verbindungselementes derartige Rillen, bzw. Vertiefungen befinden, dass das Verbindungselement mit einem Schneckentrieb antreibbar ist.

Vorzugsweise kann die Betätigungseinheit eine Kompensationsfedereinheit aufweisen, die am Getriebe und dort bevorzugt am Zahnradsegment oder in der alternativen Ausgestaltung am Verbindungselement angreift. Mit dieser Kompensationfedereinheit, die vorzugsweise eine Federführung, ein Gelenklager und die Kompensationsfeder umfasst, ist es möglich, die Leistung der Antriebseinheit zu minimieren. Die Kompensationsfedereinheit bildet dabei den Gegenpart zur Membranfeder, die abgesehen von geringfügigen Unterschieden, zur Sicherung einer Vorzugsposition mit betragsmäßig gleich großen aber entgegengesetzten Drehmomenten auf das Verbindungselement einwirken. Daher muss der die Antriebseinheit nur noch sehr geringer Drehmomente übertragen, um ein Ausrücken oder Einrücken der Kupplung zu bewirken. Ohne Kompensationsfedereinheit müsste die Antriebseinheit ansonsten das gesamte Drehmoment zum Ausrücken der Kupplung bereitstellen, was aus Kostengründen nachteilig ist.

Das beschriebene Verbindungselement wirkt als Kurvengetriebe auf das Betätigungselement.

Daneben betrifft die Erfindung ein Kraftfahrzeug mit einer Betätigungseinheit. Das Kraftfahrzeug zeichnet sich dadurch aus, dass die Betätigungseinheit wie beschrieben ausgebildet ist.

Daneben betrifft die Erfindung ein Verfahren zum Betrieb eines Kupplungsaktuators in einem Antriebsstrang eines Kraftfahrzeugs, wobei der Kupplungsaktuator eine Antriebseinheit, ein Getriebe und ein Betätigungselement umfasst und das Getriebe einen Verschleißausgleichmechanismus zum Ausgleichen eines Verschleißes an einem Kupplungsbauteil aufweist und wobei die Bewegung des Getriebes durch wenigstens einen Anschlag in wenigstens einer Richtung begrenzt wird. Das Verfahren zeichnet sich dadurch aus, dass der Anschlag in Abhängigkeit einer Führungsgröße verändert wird.

Bezüglich vorteilhafter Weiterbildungen des Verfahrens wird auf die Betätigungseinheit verwiesen. Zur Vermeidung unnötiger Wiederholungen werden die gegenständlichen Merkmale, durch die der Kupplungsaktuator ausgestaltet sein kann, nicht wiederholt.

Vorteilhafterweise kann der Anschlag in Abhängigkeit einer Eingangsgröße gesteuert werden. Dabei kann als Eingangsgröße der Verschleiß an einem Kupplungsbauteil verwendet werden. Es handelt sich dabei lediglich um eine etwas veränderte Betrachtungsweise der Wirkung der weiter oben beschriebenen Merkmale der Betätigungseinheit. Dabei wird allerdings auch auf den speziellen Fall eines Verschleißausgleichmechanismus im Kupplungsaktuator bzw. in der Betätigungseinheit abgestellt. Der veränderliche Anschlag erlaubt dagegen ein weiteres Eisatzspektrum, als durch das Verfahren beschrieben wird.

Weiterhin kann die Veränderung des Anschlags eine Veränderung der Position des Verschleißausgleichmechanismus zumindest im Wesentlichen kompensieren. Das heißt, dass letzten Endes die Wirkung des Verschleißausgleichmechanismus in einer bestimmten Hinsicht ausgeglichen oder zumindest gemildert wird. Es sei nochmals darauf hingewiesen, dass durch diesen Aufbau und diese Betriebsweise der Ausrückweg des Betätigungselementes konstant gehalten werden kann, während beispielsweise die Einkuppelposition und auch die Auskuppelposition des Betätigungselementes durchaus durch den Verschleißausgleichmechanismus im Lauf des Betriebs der Betätigungseinheit verändert werden. Andernfalls würde der Verschleißausgleichmechanismus auch überhaupt keine Wirkung entfalten.

Weitere Vorteil, Merkmale und Einzelheiten der Erfindung ergeben sich aus der folgenden Beschreibung von Ausführungsbeispielen und Figuren. Dabei zeigen:
Figur 1 eine Betätigungseinheit als Explosionszeichnung,
Figur 2 ein Zahnradsegment,
Figur 3 einen Mitnehmer,
Figur 4 einen Stößel,
Figur 5 eine Betätigungseinheit in Grundposition,
Figur 6 eine in Betätigungsrichtung bewegte Betätigungseinheit,
Figur 7 eine Betätigungseinheit in Grundposition bei einer verschlissenen Kupplung,
Figur 8 eine in Betätigungsrichtung bewegte Betätigungseinheit bei einer verschlissenen Kupplung,
Figur 9 ein Getriebe mit veränderbarem Anschlag,
Figur 10 eine Betätigungseinheit im Querschnitt,
Figur 11 die Betätigungseinheit in einer ersten perspektivischen Ansicht,
Figur 12 die Betätigungseinheit in einer zweiten perspektivischen Ansicht,
Figur 13 die Betätigungseinheit für eine Kupplung im Neuzustand und in der Einkuppelposition in einer ersten Ansicht,
Figur 14 die Betätigungseinheit für eine Kupplung im Neuzustand und in der Einkuppelposition in einer zweiten Ansicht,
Figur 15 die Betätigungseinheit für eine Kupplung mit Verschleiß und in der Einkuppelposition in einer ersten Ansicht,
Figur 16 die Betätigungseinheit für eine Kupplung mit Verschleiß und in der Einkuppelposition in einer zweiten Ansicht,
Figur 17 die Betätigungseinheit für eine Kupplung im Neuzustand und in der Auskuppelposition in einer ersten Ansicht,
Figur 18 die Betätigungseinheit für eine Kupplung im Neuzustand und in der Auskuppelposition in einer zweiten Ansicht,
Figur 19 die Betätigungseinheit für eine Kupplung mit Verschleiß und in der Auskuppelposition in einer ersten Ansicht, und
Figur 20 die Betätigungseinheit für eine Kupplung mit Verschleiß und in der Auskuppelposition in einer zweiten Ansicht.

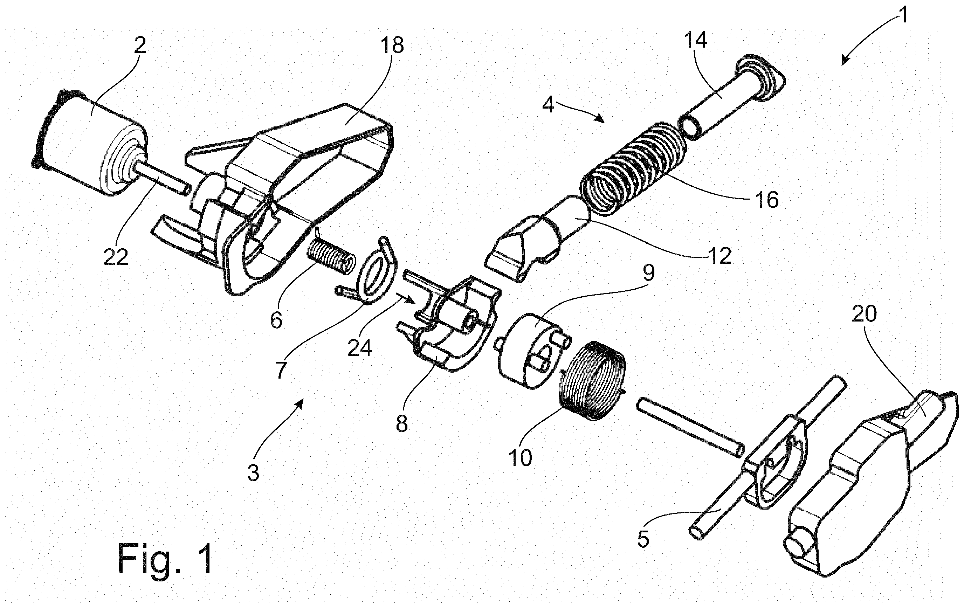

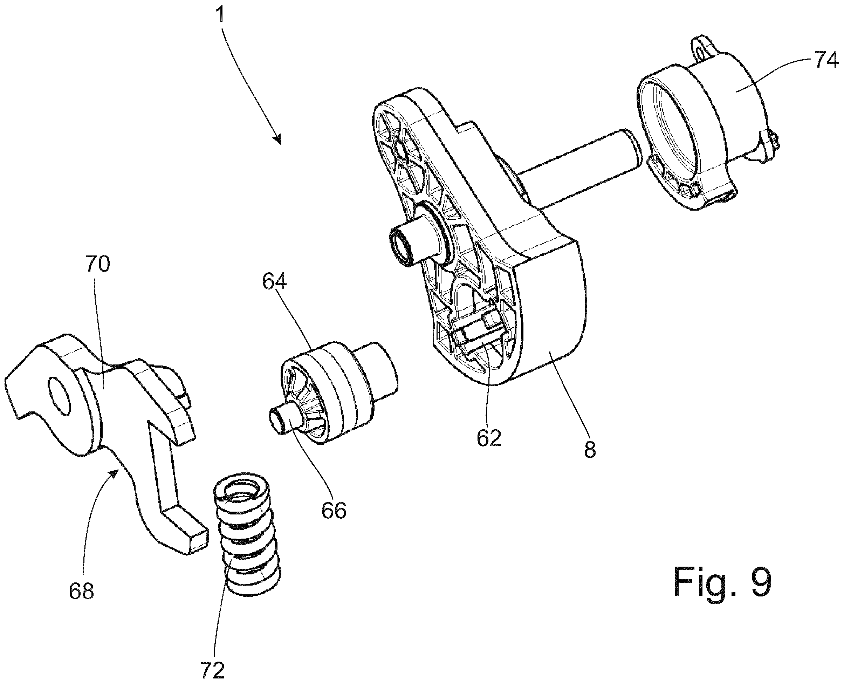

Die Figuren 1 bis 8 zeigen dabei eine Betätigungseinheit, wie sie aus der
DE 10 2014 215 324 A1 hervorgeht. Der im Folgenden beschriebene Verschleißausgleichsmechanismus ist dabei eine bevorzugte Ausgestaltung eines Verschleissausgleichsmechanismus. Da dieser in den den verstellbaren Anschlag darstellenden Figuren nicht mehr erkennbar ist wird er separat dargestellt. Die dabei beschriebenen Bauteile befinden sich so auch in den darauf folgenden Figuren 9 bis 20 dargestellten Betätigungseinheiten. Insbesondere der Verschleißausgleichmechanismus ist dann aber nicht mehr erkennbar, da er in einer Sensierungshülse versteckt vorhanden ist.

Figur 1 zeigt eine Betätigungseinheit 1 mit einem Elektromotor 2 als Antriebseinheit, einem Getriebe 3, eine Federkompensationseinheit 4 und einem Stößel 5 als Betätigungselement.

Das Getriebe 3 umfasst eine Vorlastfeder 6, eine Anschlagfeder 7, ein Zahnradsegment 8, einen Mitnehmer 9 als Verbindungselement und eine Schlingfeder 10. Die Kompensationsfedereinheit 4 weist ein Gelenklager 12, eine Federführung 14 und eine Kompensationsfeder 16 auf.

Weiterhin weist die Betätigungseinheit 1 ein Gehäuse 18 zur Aufnahme der Bauteile des Getriebes 3 wie auch der Kompensationsfedereinheit 4 sowie des Stößels 5 auf; das Gehäuse 18 ist mit einem Deckel 20 verschlossen. Im Folgenden wird die Funktionsweise der Betätigungseinheit 1 für eine gedrückte Kupplung beschrieben. Die Betätigungseinheit 1 kann jedoch durch Vornahme von Modifikationen auch für eine gezogene Kupplung eingesetzt werden. Die Modifikationen betreffen dabei die Ansteuerung des Elektromotors 2 sowie die Ausgestaltung des Stößels 5. Diese Modifikationen sind grundsätzlich bekannt und bedürfen daher keiner weiteren Erläuterung.

Die Funktionsweise der Betätigungseinheit 1 ist für eine gedrückte Kupplung wie folgt:
Die Grund- oder Ausgangsposition des Stößels 5 ist derart, dass er im eingerückten Zustand der Kupplung an der Kontaktposition zur Ausrückeinheit anliegt. In dieser Position wird der Stößel 5 von der Kompensationsfedereinheit 4 fixiert, da diese so gelagert ist, dass sie das Zahnradsegment in einer Einkuppelposition vorbelastet. Wenn im Folgenden von einer Einkuppel- oder Auskuppelposition die Rede ist, bedeutet dies, dass die Betätigungseinheit 1 so eingestellt ist, dass sich die Kupplung im eingekuppelten oder ausgekuppelten Zustand befindet. Die Einkupplung oder Auskupplung bezieht sich also auf den Zustand der Kupplung und nicht auf die Position der Teile der Betätigungseinheit 1 an sich. Analog werden die Begriffe Einrück- und Ausrückposition verwendet.

Zum Auskuppeln erhält der Elektromotor 2 ein Signal, woraufhin dieser um einen vorgegebenen Umfangswinkel verdreht wird. Dabei kämmt die Stirnradverzahnung 22 mit der Außenseite des Zahnradsegmentes 8 und überträgt auf dieses ein Drehmoment. Das Drehmoment, dass der Elektromotor aufbringt, ist ausreichend um die durch die Kompensationsfedereinheit 4 bzw. der Kompensationsfeder 16 aufgebrachte Kraft zu überwinden. Da die Kompensationsfedereinheit 4 bzw. das Gelenklager 12 nahe bei der Drehachse 24 des Zahnradsegments 8 angreift, ist das darauf zu bringende Drehmoment nicht übermäßig groß. Nachdem die Kompensationsfedereinheit 4 bzw. deren Angriffspunkt am Zahnradsegment 8 über die Drehachse 24 gedreht wurde, unterstützt die Kompensationsfedereinheit 4 die Ausrückbewegung. Durch die Drehung des Zahnradsegmentes 8 wird die Schlingfeder 10, deren Enden jeweils an einem Anschlag des Zahnradsegmentes 8 aufliegen, zusammen gezogen und in reibschlüssige Verbindung mit dem Mitnehmer 9 gebracht. Dabei umschlingen die Windungen der Schlingfeder 10 die Außenseite des Mitnehmers 9, wobei zwischen der Außenseite des Mitnehmers 9 und der Innenseite des Zahnradsegmentes 8 ein genügender Abstand verbleibt, so dass in diesem Zwischenraum die Schlingfeder genügend Spiel besitzt, um beim Einkuppeln die Umschlingung wieder lösen zu können, in dem durch Aufweitung des Durchmessers der Reibschluss zum Mitnehmer 9 unterbrochen wird. Durch die richtige Auslegung der Anschläge des Zahnradsegmentes 8 und der Schlingfeder kann so auch ein Verschleißausgleichmechanismus realisiert werden.

Im Folgenden werden das Zahnradsegment 8, der Mitnehmer 9 und die Schlingfeder 10 sowie der Stößel 5 näher beschrieben.

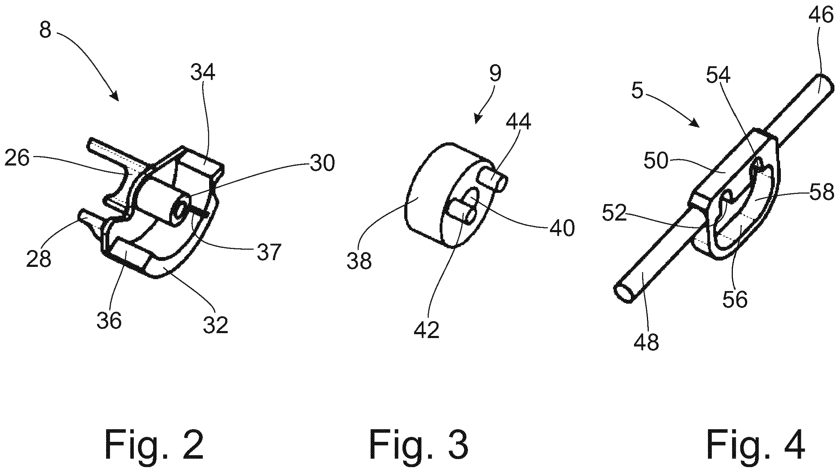

Figur 2 zeigt das Zahnradsegment 8, das elektromotorseitig zwei Anschläge 26 und 28 für die Anschlagfeder 7 besitzt. Stößelseitig befindet sich dagegen ein Lagerbolzen 30 sowie eine segmentierte Ringwandung 32. Der Lagerbolzen 30 ist zylindrisch geformt, so dass der Mitnehmer 9 auf dem Lagerbolzen 30 drehbar gelagert werden kann. Auf der Außenseite weist die Ringwandung 32 eine Stirn-Verzahnung auf, die mit der Stirnradverzahnung 22 des Elektromotors 2 kämmt. Auf der Innenseite ist die Ringwandung 32 glatt ausgebildet. Die seitlichen Enden 34 und 36 der Ringwandung 32 begrenzen diese. Die Schlingfeder 10 sitzt mit einem Ende in einer Nut 37 in der Ringwandung 32, das andere Ende ist grundsätzlich frei drehbar. Die Schlingfeder 10 weist eine Vorspannung gegenüber dem Mitnehmer 9 auf und nimmt diesen mit. Zum Entsperren und Verschleißnachstellen entriegelt das zweite Ende der Schlingfeder 10 in der Grundstellung gegen die Gehäusewandung des Gehäuses 18.

Figur 3 zeigt den Mitnehmer 9, der einen zylindrischen Grundkörper 38 mit einer Ausnehmung 40 aufweist. Bevorzugt durchgreift die Ausnehmung 40 den Grundkörper 38 auf gesamter Länge. Die Ausnehmung 40 legt aufgrund der Lagerung des Mitnehmers 9 am Lagerbolzen 30 die Drehachse des Mitnehmers 9 fest. Stößelseitig besitzt der Mitnehmer 9 zwei Antriebsbolzen 42 und 44. Diese stehen in Eingriff mit entsprechenden Ausnehmungen des Stößels 5, der im Folgenden beschrieben ist.

Figur 4 zeigt einen Stößel 5 in einer perspektivischen Ansicht. Dieser hat zwei Lagerabschnitte 46 und 48 sowie einen Mittelabschnitt 50. Die Lagerabschnitte 46 und 48 sind bevorzugt zylindrisch ausgebildet, sie können jedoch aufgrund der ausschließlichen Linearbewegung des Stößels 5 auch eine andere Grundform als die eines Kreises aufweisen. Beispielsweise können die Lagerabschnitte 46 und 48 auch als Quader ausgebildet sein und einen rechteckigen oder quadratischen Querschnitt besitzen. Die Länge der Lagerabschnitte 46 und 48 ist bevorzugt gleich groß, jedoch können die Lagerabschnitte 46 und 48 auch unterschiedliche Längen aufweisen.

Der Mittelabschnitt 50 besitzt zwei u-förmige Ausnehmungen 52 und 54, die in eine darunter liegende großräumige Ausnehmung 56 münden. Dabei ist mit "darunter liegend" lediglich die Abbildung gemäß Figur 4 beschrieben, selbstverständlich kann die Ausnehmung 56 in Abhängigkeit der Einbaulage der Betätigungseinheit 1 auch neben oder über den Ausnehmungen 52 und 54 liegen. Die Ausnehmung 56 wird auf beiden Seiten und der Unterseite durch einen ringförmigen Versteifungsabschnitt 58 begrenzt. Dabei sind die Ausnehmungen 52 und 54 mit besonderem Vorteil zwischen dem Lagerabschnitt 46 und dem Lagerabschnitt 48 angeordnet, so dass der Kraftübertrag vom Mitnehmer 9 auf den Stößel 5 an einer Fläche erfolgt, die in weiterer Verlängerung durch die Lagerabschnitte 46 und 48 abgedeckt ist. Dadurch ist der Kraftübertrag dahingehend verbessert, dass die Kraftübertragung in der gleichen Ebene liegt, wie die Kraftübertragung von Stößel auf den Ausrücker, weshalb Querkräfte vermieden werden und so die Kraftübertragung optimiert ist. Der Versteifungsabschnitt 58 ist ringförmig, um Bewegungsfreiheit für die Antriebsbolzen 42 bzw. 44 zu lassen. Wie in den folgenden Figuren noch gezeigt wird, ist diese Bewegungsfreiheit erforderlich, damit immer nur ein Antriebsbolzen den Stößel 5 antreibt.

Der Mitnehmer 9 bildet damit ein Kurvengetriebe 31 in Bezug auf den Stößel 5.

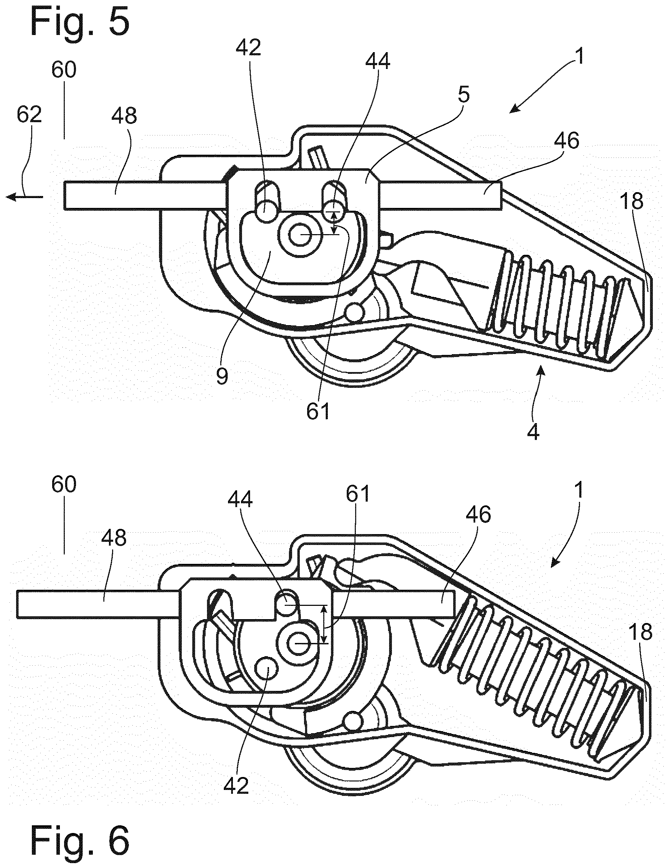

Figur 5 zeigt die Betätigungseinheit 1 in Grundposition, das heißt, dass die Kupplung eingerückt ist. Die Einrück- oder Grundposition für eine Kupplung im Neuzustand wird dabei über die Markierung 60 angezeigt. Der Pfeil 62 gibt die Richtung an, in der der Stößel 5 zu bewegen ist, um die Kupplung auszukuppeln. Der Hebelarm 61 zwischen der Drehachse 63 der Übertragungseinheit 3 bzw. des Mitnehmers 9 und dem Angriffspunkt 65 der Übertragungseinheit 3 am Stößel 5 ist ebenfalls ersichtlich.

Figur 6 zeigt die Betätigungseinheit gemäß Figur 5, wobei der Stößel in Betätigungsrichtung bewegt wurde. Dementsprechend ragt der Lagerabschnitt 48 über die Markierung 60 hinaus, während das Ende des Lagerabschnitts 46 innerhalb des Gehäuses 18 liegt und nicht mehr teilweise außerhalb. Durch weiteren Vergleich der Figuren 5 und 6 kann man erkennen, dass im Neuzustand der Kupplung, auf den ebenfalls Figur 6 bezogen ist, im Wesentlichen der Antriebsbolzen 44 den Stößel 5 antreibt. Der Antriebsbolzen 42 bewegt sich dagegen frei in der Ausnehmung 58. Diese Endposition kann auch als Ausrückposition oder Betriebsposition bezeichnet werden. Um von dieser Betriebsposition wieder in die Grundposition zurück zu gelangen, wird der Elektromotor 2 in Gegenrichtung bewegt. Die Kupplung übt sowieso einen Druck entgegen der Betätigungsrichtung 62 aus, gegen diese Kraft arbeitet und damit in Betätigungsrichtung die Kompensationsfeder 16. Der Elektromotor 2 muss daher nur ein geringes Drehmoment aufbieten, um die Betätigungseinheit 1 von der Betätigungsposition in die Grundposition zurückzuführen. Dabei hat sich der Hebelarm 61 vergrößert, was aber unabhängig von einem Verschleißausgleich geschah, weshalb sich der Hebelarm 61 in der Einrückposition, wie sie in Figur 5 zu sehen ist, nicht ändert.

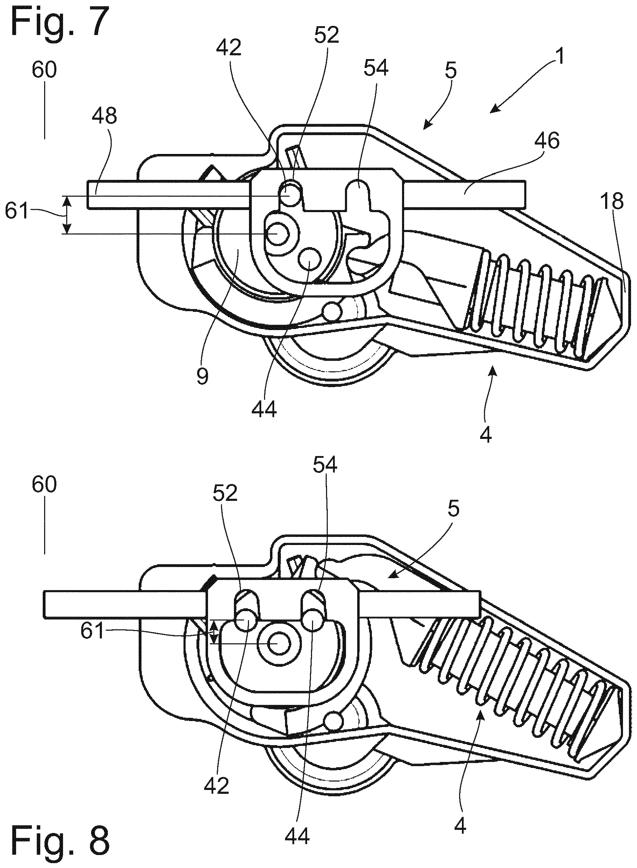

Figur 7 zeigt eine Betätigungseinheit 1 in Grundposition bzw. Einrückposition für eine Kupplung mit Verschleiß. Wie bereits beschrieben, führt der Verschleiß der Kupplungsscheibe dazu, dass in der Einrückposition die Membranfederzungen weiter nach außen gestellt werden. Dementsprechend muss der Angriffspunkt der Betätigungseinheit 1 weiter von der Kupplungsscheibe entfernt liegen, was sich dadurch zeigt, dass der Stößel 5 in der Einrückposition bei Verschleiß weiter in das Gehäuse 18 gerückt ist. Dementsprechend erreicht der Lagerabschnitt 48 die Markierung 60 nicht. Dieser Wechsel der Einrückposition geht mit einer Verdrehung der Ausgangsposition und des Mitnehmers 9 einher. Dadurch ist zu Beginn der Ausrückbewegung nunmehr der Antriebsbolzen 42 mit dem Stößel 5 bzw. der Ausnehmung 52 in Eingriff. Durch Verdrehen des Mitnehmers 9 entgegen dem Uhrzeigersinn wird der Stößel in Betätigungsrichtung 62 verschoben. Erst der Wechsel der Einrückposition des Mitnehmers 9 verändert den Hebelarm 61 in der Einrückposition. Der Hebelarm 61 in der Einrückposition ist mit zunehmendem Verschleiß größer geworden.

Figur 8 zeigt die Betätigungseinheit 1 gemäß Figur 7 in Betätigungsposition. Der Lagerabschnitt 48 erreicht dabei gerade noch die Markierung 60 und entspricht damit der in Figur 5 als Grundposition gezeigten Position des Stößels 5. Jedoch ist im Unterschied zu Figur 5 die Kompensationsfedereinheit 4 ausgefahren.

Die Anordnung der Antriebsbolzen 42 und 44 gemäß Grundposition und Betriebsposition ist dabei relativ willkürlich, wesentlich ist lediglich, dass entweder der Antriebsbolzen 42 oder der Antriebsbolzen 44 mit einer der Ausnehmungen in Verbindung steht. Eine Ausnahme gibt es lediglich für die in den Figuren 5 und 8 gezeigte Position, bei der der Antriebsbolzen 42 gerade noch und der Antriebsbolzen 44 gerade erst mit der jeweiligen Ausnehmung 52 bzw. 54 in Eingriff steht. Stünden die beiden Antriebsbolzen 42 und 44 aber längere Zeit gleichzeitig mit dem Stößel 5 in Wirkverbindung, so würde sich der Mitnehmer 9 über die Antriebsbolzen 42 und 44 mit dem Stößel 5 verkeilen. Das heißt, dass nur bei Übergabe der Antriebsleistung von einem Antriebsbolzen auf den nächsten ein gleichzeitiger Angriff von zwei Antriebsbolzen vorhanden ist.

Die Figuren 5 bis 8 zeigen eine bevorzugte Ausgestaltung mit zwei Antriebsbolzen 42 und 44 und zwei Ausnehmungen 52 und 54. Es ist jedoch möglich, die Anzahl der Antriebsbolzen und damit den Verdrehwinkel des Mitnehmers zu erhöhen. Die Anzahl der Antriebsbolzen hängt dabei vom Durchmesser des Mitnehmers 9 ab. Je kleiner dessen Durchmesser ist, desto mehr Antriebsbolzen werden benötigt. Des Weiteren hängt die Anzahl der zu verwendenden Antriebsbolzen davon ab, wie groß der Ausrückweg ist. Je länger der Ausrückweg ist, desto mehr Antriebsbolzen werden benötigt.

Figur 9 zeigt eine Explosionsdarstellung wesentlicher Teile der Betätigungseinheit 1, wobei die bereits beschriebenen Elemente des Verschleißausgleichmechanismus nicht dargestellt sind. Auch die Kompensationsfeder ist nicht explizit abgebildet. Die Veränderungen des Zahnradsegmentes 8 sind ohne Auswirkung auf die beschriebene Funktion.

Das Zahnradsegment 8 weist eine Ausnehmung 62 zur Aufnahme des beweglichen Anschlagteils 64 auf. Das Anschlagteil 64 weist einen Bolzen 66 auf, der an einer Anschlagsfläche 68 des ortsfesten Anschlagsteils 70 anschlägt, wenn sich die Betätigungseinheit 1 in der Auskuppelposition befindet. Das ortsfeste Anschlagsteil 70 ist dabei über eine Anschlagsfeder 72 mit dem Gehäuse gekoppelt, so dass auch das ortsfeste Anschlagsteil 70 nicht starr mit den Gehäuse verbunden sein muss, es kann wie man sieht auch elastisch bzw. federnd verbunden sein. Der Bolzen 66 ist nicht konzentrisch zur Drehachse des beweglichen Anschlagsteils 64 angeordnet, so dass der Bolzen 66 bei Drehung des Anschlagsteils 64 eine exzentrische Bewegung ausführt. Diese exzentrische Bewegung verändert den Anschlagszeitpunkt des beweglichen Anschlagteils 64 gegenüber der Anschlagsfläche 68, das heißt dass mit Drehung des beweglichen Anschlagsteils 64 der Anschlag nicht immer bei der gleichen Drehstellung des Zahnradsegments 8 erfolgt. Vielmehr wird die Drehstellung des Zahnradsegments 8, bei der ein Anschlag erfolgt, durch die Drehstellung des beweglichen Anschlagteils 64 festgelegt und damit verändert. Da wie beschrieben von der Drehstellung des Zahnradsegments 8 auch der Ausrückweg des Stößels 5 als Betätigungselement abhängt kann durch die Drehung des beweglichen Anschlagteils 64 gegenüber dem Zahnradsegment 8 der Anschlag verändert werden.

Bei einem Betätigungsvorgang, das heißt einem Ausrücken oder Einrücken der Kupplung, wird das Zahnradsegment 8 zusammen mit dem beweglichen Anschlagsteil 64 bewegt. Dabei ändert sich aber die Relativlage bzw. Relativdrehposition zwischen beweglichem Anschlagsteil 64 und dem Zahnradsegment 8 nicht, weswegen auch der Anschlag nicht verändert wird. Die Relativposition zwischen Anschlagsteil 64 und Zahnradsegment 8 wird vielmehr erst verändert, wenn die Sensierungshülse 74 eine Veränderung des Ausrückweges des Stößels 5 sensiert. Genau genommen sensiert die Sensierungshülse 74 eine Relativverdrehung des Kurvengetriebes, d. h. des Mitnehmers 9 oder des Kurvengetriebes gegenüber dem Zahnradsegment 8. Da dieser Wechsel der Relativposition aber durch Verschleiß hervorgerufen wird und sich auch auf den Ausrückweg des Stößels 5 auswirkt kann davon gesprochen werden, dass die Sensierungshülse 74 den Ausrückweg misst, einen Verschleiß sensiert oder einer Relativstellung zweier Getriebeteile. Aus einem anderen Blickwinkel heraus kann man aber auch sagen, dass die Sensierungshüle 74 die Auswirkung des Verschleißausgleichmechanismus bzw. des Mitnehmers 9 auf dem Ausrückweg kompensiert oder überbrückt.

Das Anschlagsteil 64 und die Sensierungshülse 74 sind drehfest mittels einer Verzahnung verbunden. Weiterhin ist die Sensierungshülse 74 drehfest mit dem Kurvengetriebe der Betätigungseinheit 1, und damit mit der Getriebeabtriebsseite drehfest verbunden.

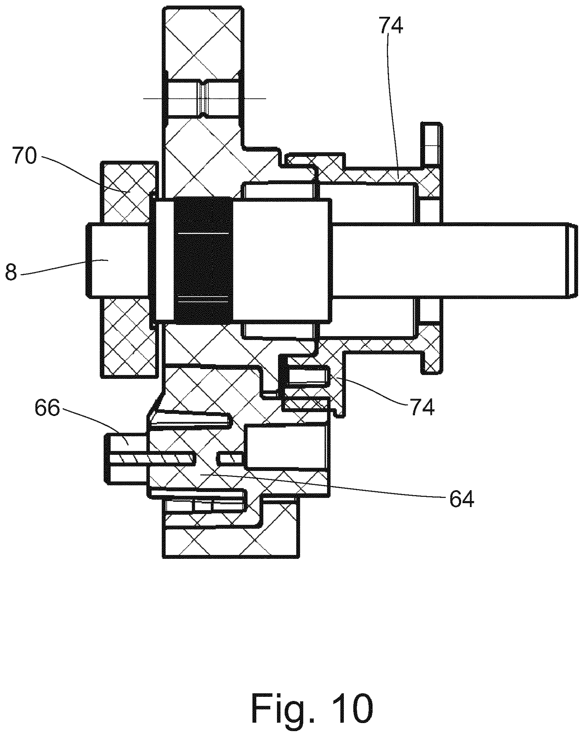

Figur 10 zeigt die Betätigungseinheit 1 im Querschnitt. Dabei kann man die drehfeste Verbindung der Sensierungshülse 74 mit dem beweglichen Anschlagsteil 64 erkennen.

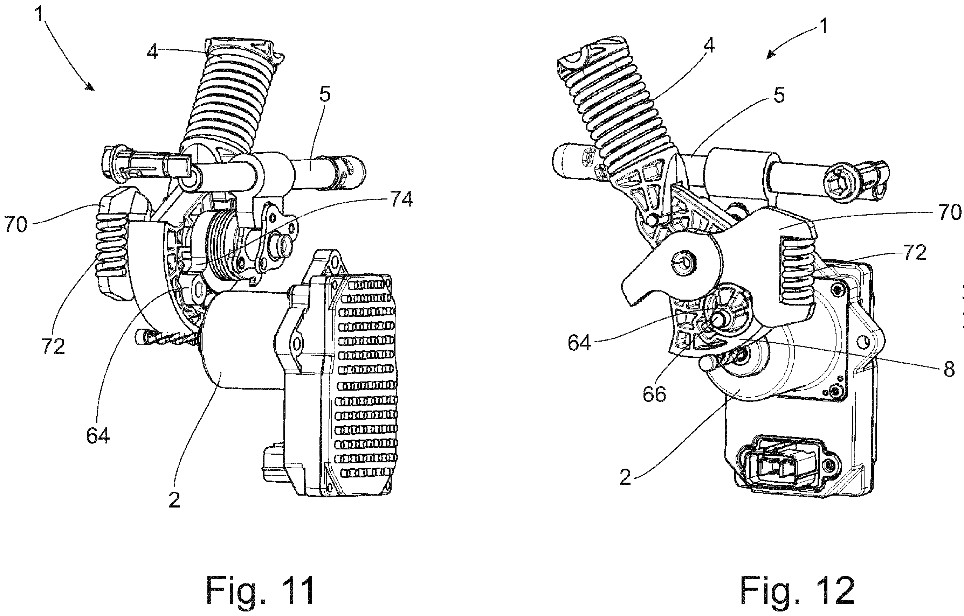

Die Figuren 11 und 12 zeigen die Betätigungseinheit 1 aus zwei entgegengesetzten Blickrichtungen. Während man in Figur 11 die Verbindung zwischen Sensierungshülse 74 und beweglichem Anschlagsteil 64 erkennen kann ist in Figur 12 erkennbar, wie eine Relativverdrehung zwischen Anschlagsteil 64 und Zahnradsegment 8 den Anschlag verändert. Dies geschieht dadurch, dass das Zahnradsegment 8 in Abhängigkeit der Stellung des Bolzens 66 in Vergleich zum Anschlag 70 weiter gedreht werden kann oder auch nicht. In Abhängigkeit der Verdrehbarkeit des Zahnradsegments 8 ist aber auch der Ausrückweg des Stößels 5 begrenzt. Eine Begrenzung des Weges des Getriebes, und zwar in Form einer Begrenzung des Drehwinkels des Zahnradsegmentes 8, wirkt sich also auf den Ausrückweg des Stößels 5 aus. Durch die Veränderlichkeit des Anschlags bestehend aus dem beweglichen Anschlagsteil 64 und dem ortsfesten Anschlagsteil 70 wird damit auch der Ausrückweg des Stößels 5 veränderlich.

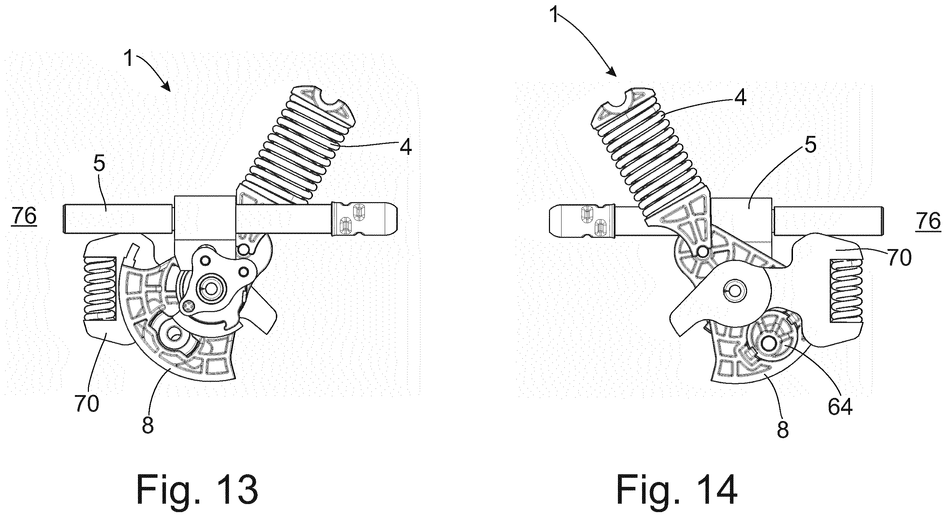

Die Figuren 13 bis 20 zeigen die Betätigungseinheit 1 jeweils von entgegengesetzten Seiten einmal in der Einkuppelposition und der Auskuppelposition und zwar im Neuzustand und mit Verschleiß. Im Einzelnen:

Die Figuren 13 und 14 zeigen die Betätigungseinheit 1 im Neuzustand und in der Einkuppelposition. Der besseren Übersichtlichkeit halber sind nur die wichtigsten Bauteile der Betätigungseinheit 1 mit Bezugszeichen versehen.

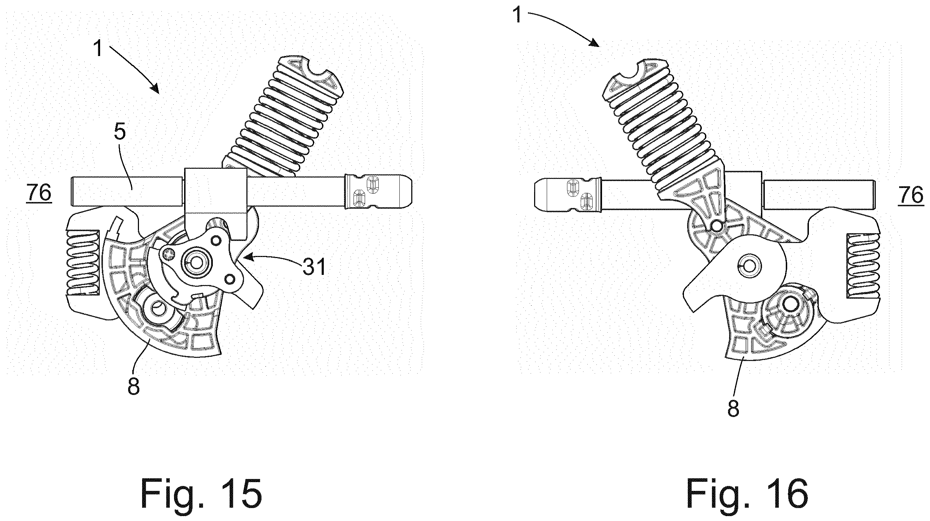

Die Figuren 15 und 16 zeigen die Betätigungseinheit 1 ebenfalls in Einkuppelposition allerdings für eine bereits zumindest teilweise verschlissene Kupplung, weswegen sich die Position des Stößels 5 zur von der Kupplungsseite 76 wegbewegt hat. Dies wird dadurch möglich, dass das Kurvengetriebe 31 seine Relativposition gegenüber dem Zahnradsegment 8 verändert hat, und zwar aufgrund des weiter oben ausführlich beschriebenen Verschleißausgleichmechanismus.

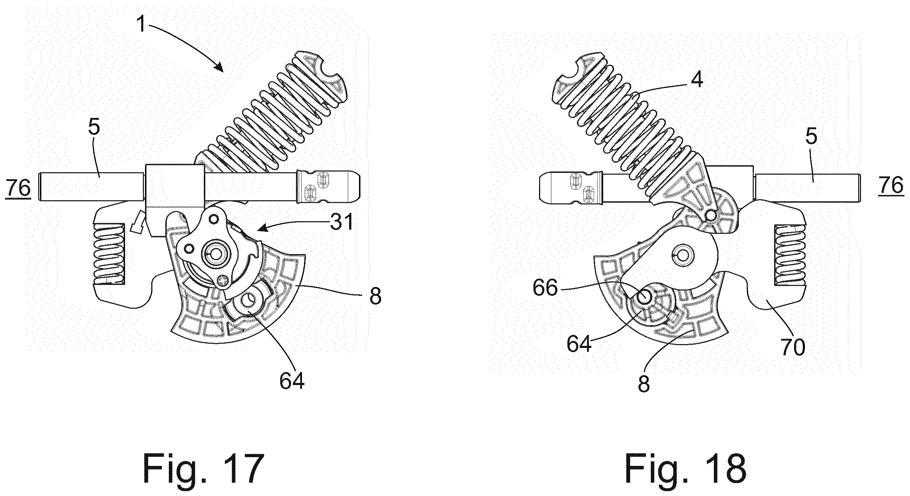

Die Figuren 17 und 18 zeigen die Betätigungseinheit 1 im Neuzustand und in der Auskuppelposition. Dabei ist der Stößel 5 zur Kupplungsseite hin bewegt, so dass eine auf der Kupplungsseite 76 vorhandene Kupplung ausgekuppelt wäre. Deutlich erkennt man die Verdrehung des Kurvengetriebes 31 gegenüber Figur 13 bzw. Figur 14, wenn man von Figur 18 ausgeht.

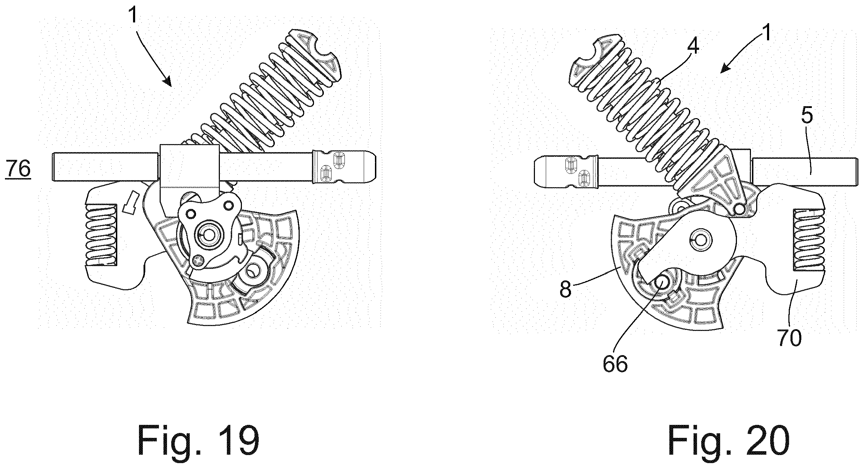

Die Figuren 19 und 20 zeigen die Betätigungseinheit 1 von zwei verschiedenen Seiten in der Auskuppelposition für eine Kupplung mit Verschleiß, weswegen der Verschleißmechanismus die Relativposition zwischen Kurvengetriebe 31 und Zahnradsegment 8 verändert hat. Dadurch ändern sich nicht nur die Anfangspositionen des Stößels 5 im Einkuppelzustand und Auskuppelzustand, vielmehr wird auch der Ausrückweg, das heißt der Abstand zwischen Auskuppelposition und Einkuppelposition, verändert. Allerdings wird diese Veränderung durch das bewegliche Anschlagsteil 64 dahingehend ausgeglichen, dass, wie ein Vergleich der Figuren 18 und 20 zeigt, der Anschlag der Auskuppelposition für den verschlissenen Zustand gegenüber dem Neuzustand verändert ist. Dadurch wird die Drehbewegung des Zahnradsegments 8 vergrößert, wodurch der Ausrückweg des Stößels 5 verlängert wird. Auf diese Art und Weise kann die Verkürzung des Ausrückweges durch den Verschleißausgleichmechanismus ausgeglichen werden.

### Bezugszeichen

- 1: Betätigungseinheit
- 2: Elektromotor
- 3: Übertragungseinheit
- 4: Kompensationsfedereinheit
- 5: Stößel
- 6: Vorlastfeder
- 7: Anschlagfeder
- 8: Zahnradsegment
- 9: Mitnehmer
- 10: Schlingfeder
- 12: Gelenklager
- 14: Federführung
- 16: Kompensationsfeder
- 18: Gehäuse
- 20: Deckel
- 22: Stirnradverzahnung
- 24: Drehachse
- 26: Anschlag
- 28: Anschlag
- 30: Lagerbolzen
- 31: Kurvengetriebe
- 32: Ringwandung
- 34: seitliches Ende
- 36: seitliches Ende
- 37: Nut
- 38: Grundkörper
- 40: Ausnehmung
- 42: Antriebsbolzen
- 44: Antriebsbolzen
- 46: Lagerabschnitt
- 48: Lagerabschnitt
- 50: Mittelabschnitt
- 52: Ausnehmung
- 54: Ausnehmung
- 56: Ausnehmung
- 58: Versteifungsabschnitt
- 60: Markierung
- 61: Hebelarm
- 62: Ausnehmung
- 64: Anschlagteil
- 66: Bolzen
- 68: Anschlagfläche
- 70: Anschlagsteil
- 72: Anschlagfeder
- 74: Sensierungshülse
- 76: Kupplungsseite

## Patentansprüche

1. Betätigungseinheit (1) für eine Kupplung umfassend eine Antriebseinheit (2), ein Betätigungselement (5) zum Betätigen der Kupplung und ein Getriebe (3) zum Übertragen eines durch die Antriebseinheit (2) erzeugten Drehmomentes auf das Betätigungselement (5), wobei die Bewegung des Getriebes (3) durch wenigstens einen Anschlag in wenigstens einer Richtung begrenzt ist, wobei sich ein bewegliches Anschlagsteil auf ein ortsfestes Anschlagsteil zubewegt, **dadurch gekennzeichnet, dass** der Anschlag in Abhängigkeit wenigstens einer Führungsgröße veränderbar ist.

2. Betätigungseinheit nach Anspruch 1, **dadurch gekennzeichnet, dass** die Stellung des beweglichen Anschlagsteils (64) des Anschlags veränderbar ist.

3. Betätigungseinheit nach Anspruch 1 oder 2, **dadurch gekennzeichnet, dass** als Führungsgröße eine vorgebbare Betriebsgröße oder eine von einer vorgebbaren Betriebsgröße des Betätigungselementes (5) abhängige oder ableitbare Größe verwendbar ist.

4. Betätigungseinheit nach Anspruch 3, **dadurch gekennzeichnet, dass** die vorgebbare Betriebsgröße der Ausrückweg des Betätigungselementes (5) ist.

5. Betätigungseinheit nach einem der vorangehenden Ansprüche, **dadurch gekennzeichnet, dass** der Anschlag als bewegliches Anschlagsteil (64) einen exzentrisch drehgelagerten Bolzen (66) umfasst.

6. Betätigungseinheit nach einem der vorangehenden Ansprüche, **dadurch gekennzeichnet, dass** das Getriebe (3) einen Sensor (74) zur Erfassung der Führungsgröße aufweist.

7. Betätigungseinheit nach Anspruch 6, **dadurch gekennzeichnet, dass** der Sensor zum Feststellen einer Relativstellung, insbesondere eines Drehwinkels, von zwei Getriebeelementen (8, 31) ausgebildet ist.

8. Betätigungseinheit nach Anspruch 6 oder 7, **dadurch gekennzeichnet, dass** der Sensor (74) mit dem beweglichen Anschlagsteil (64) des Anschlags drehfest verbunden ist.

9. Betätigungseinheit nach einem der Ansprüche 6 bis 8, **dadurch gekennzeichnet, dass** der Sensor als Sensierungshülse (74) ausgebildet ist.

10. Betätigungseinheit nach einem der Ansprüche 6 bis 9, **dadurch gekennzeichnet, dass** der Sensor (74) mit demjenigen Getriebeteil (9, 31), das das Betätigungselement (5) antreibt, drehfest verbunden ist.

11. Betätigungseinheit nach einem der Ansprüche 6 bis 10, **dadurch gekennzeichnet, dass** der Sensor (74) zwischen der Antriebseite (8) und der Abtriebsseite (9, 31) des Getriebes (3) angeordnet ist.

12. Betätigungseinheit nach einem der Ansprüche 6 bis 11, **dadurch gekennzeichnet, dass** der Sensor (74) dazu ausgebildet ist, eine durch eine in der Betätigungseinheit (1) angeordnete Verschleißausgleicheinrichtung verursachte Relativbewegung, insbesondere Relativdrehung, zwischen zwei Getriebeelementen (8, 31) zu erfassen.

13. Betätigungseinheit nach einem der Ansprüche 6 bis 12, **dadurch gekennzeichnet, dass** der Sensor (74) die Abtriebsseite (31) des Getriebes drehfest mit dem bewegbaren Anschlagsteil (64) des Anschlags verbindet.

14. Betätigungseinheit nach einem der vorangehenden Ansprüche, **dadurch gekennzeichnet, dass** die Abtriebsseite des Getriebes als Kurvengetriebe ausgebildet ist.

15. Betätigungseinheit nach einem der vorangehenden Ansprüche, **dadurch gekennzeichnet, dass** das Getriebe (3) ein Zahnradsegment (8) aufweist und der bewegliche Anschlagsteil (64) des Anschlags im oder am Zahnradsegment (8) drehbar gelagert ist.

16. Kraftfahrzeug mit einer Betätigungseinheit, **dadurch gekennzeichnet, dass** die Betätigungseinheit nach einem der vorangehenden Ansprüche ausgebildet ist.

17. Verfahren zum Betrieb einer Betätigungseinheit (1) in einem Antriebsstrang eines Kraftfahrzeugs, wobei die Betätigungseinheit eine Antriebseinheit (2), ein Getriebe (3) und ein Betätigungselement (5) umfasst und das Getriebe (3) einen Verschleißausgleichsmechanismus zum Ausgleichen eines Verschleißes an einem Kupplungsbauteil, insbesondere der Kupplungsscheibe, aufweist, und wobei die Bewegung des Getriebes (3) durch wenigstens einen Anschlag (64, 68) in wenigstens einer Richtung begrenzt wird, **dadurch gekennzeichnet, dass** der Anschlag (64, 68) in Abhängigkeit einer Führungsgröße verändert wird.

18. Verfahren nach Anspruch 17, **dadurch gekennzeichnet, dass** der Anschlag (64, 68) in Abhängigkeit einer Eingangsgröße gesteuert wird.

19. Verfahren nach Anspruch 18, **dadurch gekennzeichnet, dass** als Eingangsgröße der Verschleiß an einem Kupplungsbauteil verwendet wird.

20. Verfahren nach einem der Ansprüche 17 bis 19, **dadurch gekennzeichnet, dass** die Veränderung des Anschlags (64, 68) eine Veränderung der Position des Verschleißausgleichsmechanismus zumindest im Wesentlichen kompensiert.

## Claims

1. Actuating unit (1) for a clutch comprising a drive unit (2), an actuating element (5) for the actuation of the clutch, and a gear mechanism (3) for the transmission of a torque which is produced by way of the drive unit (2) to the actuating element (5), the movement of the gear mechanism (3) being limited in at least one direction by way of at least one stop, a movable stop part moving towards a stationary stop part, **characterized in that** the stop can be changed in a manner which is dependent on at least one reference variable.

2. Actuating unit according to Claim 1, **characterized in that** the position of the movable stop part (64) of the stop can be changed.

3. Actuating unit according to Claim 1 or 2, **characterized in that** a predefinable parameter or a variable which is dependent on or can be derived from a predefinable parameter of the actuating element (5) can be used as the reference variable.

4. Actuating unit according to Claim 3, **characterized in that** the predefinable parameter is the disengagement travel of the actuating element (5).

5. Actuating unit according to one of the preceding claims, **characterized in that** the stop comprises an eccentrically rotationally mounted pin (66) as movable stop part (64).

6. Actuating unit according to one of the preceding claims, **characterized in that** the gear mechanism (3) has a sensor (74) for the detection of the reference variable.

7. Actuating unit according to Claim 6, **characterized in that** the sensor is configured for the determination of a relative position, in particular a rotary angle, of two gear mechanism elements (8, 31).

8. Actuating unit according to Claim 6 or 7, **characterized in that** the sensor (74) is connected fixedly to the movable stop part (64) of the stop so as to rotate with it.

9. Actuating unit according to one of Claims 6 to 8, **characterized in that** the sensor is configured as a sensing sleeve (74).

10. Actuating unit according to one of Claims 6 to 9, **characterized in that** the sensor (74) is connected fixedly to that gear mechanism part (9, 31) which drives the actuating element (5) so as to rotate with it.

11. Actuating unit according to one of Claims 6 to 10, **characterized in that** the sensor (74) is arranged between the drive side (8) and the output side (9, 31) of the gear mechanism (3).

12. Actuating unit according to one of Claims 6 to 11, **characterized in that** the sensor (74) is configured to detect a relative movement, in particular a relative rotation, between two gear mechanism elements (8, 31), which relative movement is caused by way of a wear compensation device which is arranged in the actuating unit (1).

13. Actuating unit according to one of Claims 6 to 12, **characterized in that** the sensor (74) connects the output side (31) of the gear mechanism fixedly to the movable stop part (64) of the stop so as to rotate with it.

14. Actuating unit according to one of the preceding claims, **characterized in that** the output side of the gear mechanism is configured as a cam mechanism.

15. Actuating unit according to one of the preceding claims, **characterized in that** the gear mechanism (3) has a gearwheel segment (8), and the movable stop part (64) of the stop is mounted rotatably in or on the gearwheel segment (8).

16. Motor vehicle with an actuating unit, **characterized in that** the actuating unit is configured according to one of the preceding claims.

17. Method for operating an actuating unit (1) in a drive train of a motor vehicle, the actuating unit comprising a drive unit (2), a gear mechanism (3) and an actuating element (5), and the gear mechanism (3) having a wear compensation mechanism for the compensation of wear on a clutch component, in particular the clutch plate, and the movement of the gear mechanism (3) being limited in at least one direction by way of at least one stop (64, 68), **characterized in that** the stop (64, 68) is changed in a manner which is dependent on a reference variable.

18. Method according to Claim 17, **characterized in that** the stop (64, 68) is controlled in a manner which is dependent on an input variable.

19. Method according to Claim 18, **characterized in that** the wear on a clutch component is used as input variable.

20. Method according to one of Claims 17 to 19, **characterized in that** the change of the stop (64, 68) compensates at least substantially for a change of the position of the wear compensation mechanism.

## Revendications

1. Unité d'actionnement (1) pour un embrayage, comprenant une unité d'entraînement (2), un élément d'actionnement (5) pour l'actionnement de l'embrayage et une transmission (3) pour le transfert d'un couple généré par l'unité d'entraînement (2) à l'élément d'actionnement (5), le mouvement de la transmission (3) étant limité dans au moins une direction par au moins une butée, une partie de butée mobile étant déplacée vers une partie de butée fixe, **caractérisée en ce que** la butée peut être modifiée en fonction d'au moins une grandeur de guidage.

2. Unité d'actionnement selon la revendication 1, **caractérisée en ce que** la position de la partie de butée mobile (64) de la butée peut être modifiée.

3. Unité d'actionnement selon la revendication 1 ou 2, **caractérisée en ce qu'**une grandeur de fonctionnement prédéfinissable ou une grandeur dépendant ou pouvant être dérivée d'une grandeur de fonctionnement prédéfinissable de l'élément d'actionnement (5) peut être utilisée en tant que grandeur de guidage.

4. Unité d'actionnement selon la revendication 3, **caractérisée en ce que** la grandeur de fonctionnement prédéfinissable est la course de retour de l'élément d'actionnement (5).

5. Unité d'actionnement selon l'une quelconque des revendications précédentes, **caractérisée en ce que** la butée comprend, en tant que partie de butée mobile (64), un boulon supporté à rotation de manière excentrique (66).

6. Unité d'actionnement selon l'une quelconque des revendications précédentes, **caractérisée en ce que** la transmission (3) présente un capteur (74) pour détecter la grandeur de guidage.

7. Unité d'actionnement selon la revendication 6, **caractérisée en ce que** le capteur est réalisé pour détecter une position relative, en particulier un angle de rotation, de deux éléments de la transmission (8, 31).

8. Unité d'actionnement selon la revendication 6 ou 7, **caractérisée en ce que** le capteur (74) est connecté de manière solidaire en rotation à la partie de butée mobile (64) de la butée.

9. Unité d'actionnement selon l'une quelconque des revendications 6 à 8, **caractérisée en ce que** le capteur est réalisé sous forme de manchon de détection (74) .

10. Unité d'actionnement selon l'une quelconque des revendications 6 à 9, **caractérisée en ce que** le capteur (74) est connecté de manière solidaire en rotation à la partie de transmission (9, 31) qui entraîne l'élément d'actionnement (5).

11. Unité d'actionnement selon l'une quelconque des revendications 6 à 10, **caractérisée en ce que** le capteur (74) est disposé entre le côté d'entraînement (8) et le côté de prise de force (9, 31) de la transmission (3).

12. Unité d'actionnement selon l'une quelconque des revendications 6 à 11, **caractérisée en ce que** le capteur (74) est réalisé de manière à détecter un mouvement relatif, en particulier une rotation relative, entre deux éléments de la transmission (8, 31), provoqué(e) par un dispositif de compensation d'usure disposé dans l'unité d'actionnement (1).

13. Unité d'actionnement selon l'une quelconque des revendications 6 à 12, **caractérisée en ce que** le capteur (74) relie le côté de prise de force (31) de la transmission de manière solidaire en rotation à la partie de butée mobile (64) de la butée.

14. Unité d'actionnement selon l'une quelconque des revendications précédentes, **caractérisée en ce que** le côté de prise de force de la transmission est réalisé sous forme de transmission à cames.

15. Unité d'actionnement selon l'une quelconque des revendications précédentes, **caractérisée en ce que** la transmission (3) présente un segment de roue dentée (8) et la partie de butée mobile (64) de la butée est supportée de manière rotative dans ou sur le segment de roue dentée (8).

16. Véhicule automobile comprenant une unité d'actionnement, **caractérisé en ce que** l'unité d'actionnement est réalisée selon l'une quelconque des revendications précédentes.

17. Procédé de fonctionnement d'une unité d'actionnement (1) dans une chaîne cinématique d'un véhicule automobile, l'unité d'actionnement comprenant une unité d'entraînement (2), une transmission (3) et un élément d'actionnement (5) et la transmission (3) présentant un mécanisme de compensation d'usure pour compenser une usure au niveau d'un composant d'embrayage, en particulier du disque d'embrayage, et le mouvement de la transmission (3) étant limité dans au moins une direction par au moins une butée (64, 68), **caractérisé en ce que** la butée (64, 68) est modifiée en fonction d'une grandeur de guidage.

18. Procédé selon la revendication 17, **caractérisé en ce que** la butée (64, 68) est commandée en fonction d'une grandeur d'entrée.

19. Procédé selon la revendication 18, **caractérisé en ce que** l'on utilise en tant que grandeur d'entrée l'usure au niveau d'un composant de l'embrayage.

20. Procédé selon l'une quelconque des revendications 17 à 19, **caractérisé en ce que** la modification de la butée (64, 68) compense au moins essentiellement une modification de la position du mécanisme de compensation d'usure.
